# EUROPÄISCHE PATENTSCHRIFT

(11) **EP 2 064 021 B1**
(45) Veröffentlichungstag und Bekanntmachung des Hinweises auf die Patenterteilung: **15.06.2011**
(21) Anmeldenummer: 07802315.7
(22) Anmeldetag: 14.09.2007
(51) Int. Cl.: B23K 20/12, B23K 35/02, F16B 37/06

(54) **BEFESTIGUNGSELEMENT FÜR EINE REIBSCHWEISSVERBINDUNG**
FIXING ELEMENT FOR A FRICTION WELDING JOINT
ÉLÉMENT DE FIXATION D'UNE LIAISON DE SOUDAGE PAR FRICTION

(30) Priorität: 20.09.2006 DE 102006044378
(43) Veröffentlichungstag der Anmeldung: 03.06.2009
(73) Patentinhaber: EJOT GmbH & Co. KG, 57334 Bad Laasphe (DE)
(72) Erfinder: CHRIST, Eberhard, 99897 Tambach-Dietharz (DE)
(74) Vertreter: Bardehle, Heinz
(86) Internationale Anmeldenummer: PCT/EP2007/008024
(87) Internationale Veröffentlichungsnummer: WO 2008/034563

(56) Entgegenhaltungen:
- DE-A1- 2 227 384
- DE-A1- 19 620 814
- DE-U1-202004 014 071
- US-A1- 2004 108 359

## Beschreibung

Die Erfindung bezieht sich auf ein Befestigungselement mit einer eine Reibfläche bildenden konzentrischen Stirnseite zur Reibschweißverbindung mit einem flächigen Bauteil durch von dem Befestigungselement gegen das Bauteil wirkende Rotationskraft und Axialkraft und mit auf der Stirnseite mehreren radial verlaufenden Wülsten.

Bei einem als Leichtmetallbolzen ausgebildeten Befestigungselement gemäß der DE 201 09 359 U1 hat man zum Reibschweißen die konzentrische Stirnseite des Bolzens bereits mit radial verlaufenden Wülsten versehen, die wie sternartig angeordnete Schneiden wirken und aufgrund dieser Gestaltung in der Lage sind, eine auf einem Blech gebildete Oxydschicht mechanisch aufzubrechen, so dass sich eine sichere Reibschweißverbindung zwischen einem Leichtmetallbolzen und einem Aluminiumblech herstellen lässt. Gemäß diesem Stand der Technik soll durch die Wülste, die als fräserartige Schneiden ausgebildet sind, eine auf dem Blech vorhandene Oxydschicht zusammen mit durch den Reibschweißvorgang plastifiziertem Material nach außen aus der Fügezone weg in einer Ringwulst gefördert werden. Dabei wird also das eine Verunreinigung darstellende Oxyd mit plastifiziertem Material vom Bolzen gemischt und nach außen zu dem Ringwulst gefördert, wo dann ein von Veruneinigungen durchsetztes Bolzenmaterial in Form des Ringwulstes für die Haltbarkeit der Bolzenschweißverbindung sorgen soll, das Bolzenmaterial aber der eigentlichen Verbindungszone im Bereich der Stirnseite des Bolzens für die Bolzenschweißverbindung verloren geht.

Der Erfindung liegt die Aufgabe zugrunde, das eingangs beschriebene Befestigungselement, das auf seiner Stirnseite mit mehreren radial verlaufenden Wülsten versehen ist, so zu gestalten, dass einerseits Verschmutzungen beim Reibschweißvorgang sicher beseitigt werden, andererseits aber das plastifizierte Material des Befestigungselementes und des an diesem befestigte Bauteil optimal für die Herstellung der Reibschweißverbindung ausgenutzt wird. Erfindungsgemäß geschieht dies dadurch, dass die Wülste in Drehrichtung von einer in die Reibfläche eingelassenen Frontnut begrenzt sind, wobei die Wülste sich nur geringfügig axial gegenüber der Reibfläche erheben und mit einer Schabfläche versehen sind, von der beim Reibschweißvorgang abgeschabtes Material in die Frontnut geschoben wird, und dass die Schabflächen zusammen in einer Ebene liegen oder als koaxialer Kegel verlaufen.

Durch die Bildung einer Frontnut vor jedem Wulst auf der Stirnseite des Befestigungselementes in einer Weise, dass die Frontnut in die Reibfläche eingelassen ist und die Wülste sich nur geringfügig axial gegenüber der Reibfläche erheben, ergibt sich beim Reibschweißvorgang durch die Schabfläche zunächst ein Abreiben von Verschmutzungen, insbesondere von Oxyd, das dabei in die Frontnut von den Wülsten geschoben wird, wobei aber die Wülste aufgrund ihrer nur geringfügigen Anhebung gegenüber der Reibfläche beim Bolzenschweißen frühzeitig abgetragen werden, so dass sehr schnell die Reibfläche des Befestigungselementes mit dem Bauteil in direkten Flächenkontakt gerät und sich die Reibwirkung und damit Plastifizierung des Materials sowohl des Befestigungselements als auch des Bauteils sehr schnell ergibt, wobei dieses Material dann auch praktisch vollständig für die Bildung der Reibschweißverbindung über die gesamte Stirnfläche des Befestigungselementes zur Verfügung bleibt. Die Folge davon ist eine besonders sichere Verbindung zwischen Befestigungselement und Bauteil, die aufgrund der gegebenen Dimensionen sich auch bei automatischer Fabrikation besonders schnell herbeiführen lässt. Für die Gestaltung der Reibfläche ist es auch möglich, dass die Wülste beidseitig jeweils in Drehrichtung von einer Frontnut und einer Rücknut in der Reibfläche begrenzt sind, wobei in die Rücknut der von der Reibfläche sich abhebende Rest des betreffenden Wulstes durch plastische Deformation geschoben wird. Die Anordnung einer Rücknut zusätzlich zu der Frontnut eröffnet so die Möglichkeit, dass die Rücknut den beim Reibschweißvorgang weggedrückten Rest des betreffenden Wulstes aufnimmt, so dass dieser Rest sich nicht in die Reibschweißverbindung hineinschiebt, wo er unter Umständen stören könnte. Die Gestaltung des Befestigungselements mit Frontnut und Rücknut auf der Reibfläche ermöglicht es auch, zum Reibschweißen das Befestigungselement in beliebiger Richtung zu drehen

Die Gestaltung der Wülste kann man zweckmäßig in Abhängigkeit vom Material des flächigen Bauteils wählen. Handelt es sich bei dem flächigen Bauteil um ein Stahlteil, so ist es für das Abtragen von Oxyd günstig, dass die Schabfläche entweder einseitig oder beidseitig mit einer scharfen Kante versehen ist. Die beidseitig gegebene scharfe Kante ist insbesondere aus Gründen der Fertigungstechnik des betreffenden Befestigungselementes von Vorteil. Handelt es sich dagegen um ein relativ weiches Material für das flächige Bauteil, z.B. Aluminium, so reicht es aus, die Schabfläche abgerundet in den Wulst verlaufen zu lassen.

Um beim Reibschweißvorgang entstehenden Abrieb, der gegebenenfalls auch radial nach außen wandert, aufnehmen zu können, sieht man zweckmäßig in der Stirnseite in ihrem äußeren Bereich eine konzentrisch umlaufende Ringnut vor. In dieser Ringnut wird radial vor den Wülsten verschobenes Material dann ohne weiteres aufgenommen. Die Ringnut ist bei vollständigem Anschweißen des Befestigungselementes radial nach außen abgeschlossen, so dass das in die Ringnut geschobene Material sicher eingeschlossen ist und nicht zu irgendwelchen Verschmutzungen führen kann.

Das Befestigungselement selbst kann insbesondere als Bolzen ausgebildet sein, es ist aber auch möglich, eine Mutter als Befestigungselement im Sinne dieser Erfindung zu verwenden.

Die Reibfläche des Befestigungselementes kann als flacher Kegel mit einem Kegelwinkel α = 160° bis 178° gebildet sein. Handelt es sich dabei um einen konvexen Kegel, so hat dies den Vorteil, dass die Reibfläche mit der Spitze des Kegels zunächst auf das Bauteil beim Reibschweißvorgang auftrifft und hier mit besonders hohem Druck wirkt, der beim Anschmelzen der beiden zu verbinden Teile nach außen wandert und damit allmählich die gesamte Reibfläche überdeckt. Es ist andererseits auch möglich, eine konkave Reibfläche als flachen Kegel auszubilden. In diesem Falle trifft beim Andrücken des Befestigungselements an das Bauteil zunächst der äußere Rand der Reibfläche auf, der dann in seinem inneren Bereich das plastifizierte Material beim Reibschweißvorgang einschließt und nicht nach außen entweichen lässt.

Ausführungsbeispiele der Erfindung sind in den Figuren dargestellt. Es zeigen:
- Figur 1a:: ein als Bolzen ausgebildetes Befestigungselement mit drei radia- len Wülsten auf der Reibfläche und jeweils einer Frontnut in perspektivischer Sicht;
- Figur 1b:: einen Ausschnitt aus der Darstellung in Figur 1a, die die Gestal- tung eines Wulstes aus der Figur 1 a verdeutlicht;
- Figur 2:: einen als Befestigungselement ausgebildeten Bolzen mit drei Wülste, die zu beiden Seiten von einer Nut, also einer Frontnut und einer Rücknut, eingefasst sind;
- Figur 3:: einen Bolzen ähnlich demjenigen, der Figur la zusätzlich mit einer konzentrisch umlaufenden Ringnut;
- Figur 4:: einen Schnitt gemäß der Schnittlinie IV-IV aus Figur 1, wobei für die Reibfläche als auch für die Schabfläche jeweils ein ko- axialer Kegel und einem Kegelwinkel α = 160° bis 178° vorge- sehen ist;
- Figur 5:: einen Schnitt ähnlich demjenigen gemäß Figur 4, allerdings mit einem Befestigungselement, bei dem sowohl die Reibfläche als auch die Schabfläche eben ausgebildet sind;
- Figur 6:: eine ähnliche Gestaltung wie gemäß Figur 4, jedoch mit einer konischen Reibfläche und einer ebenen Schabfläche;
- Figur 7:: ein als Mutter ausgebildetes Befestigungselement;
- Figur 8:: einen Schnitt gemäß der Linie VIII-VIII aus Figur 7.

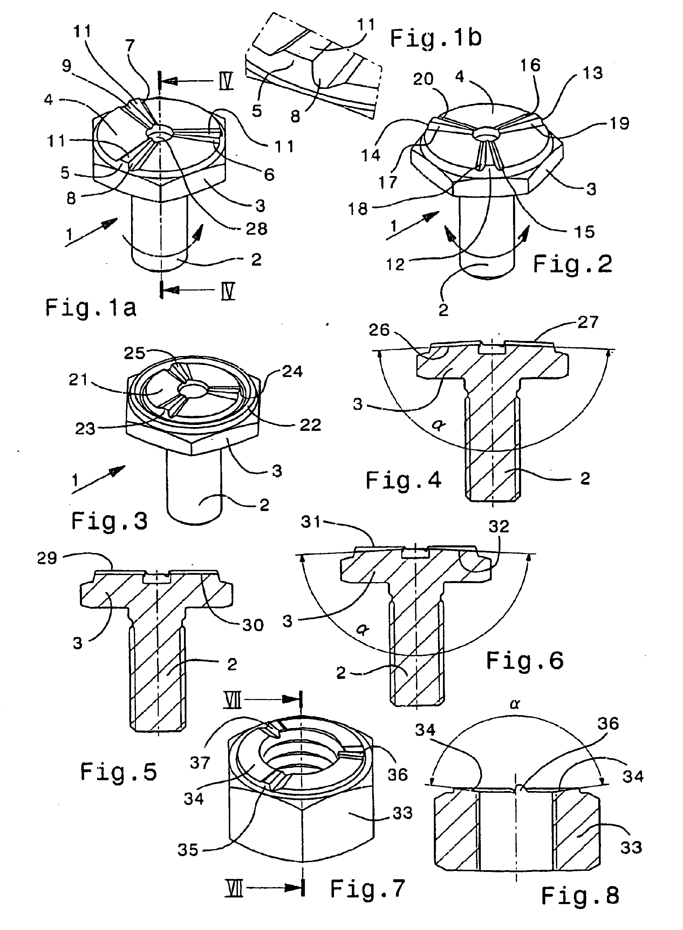

In der Figur 1a ist das als Bolzen ausgebildete Befestigungselement 1 mit dem Schaft 2 und Bolzenkopf 3 dargestellt, der hier zum Einspannen in ein Antriebselement als Sechskant ausgebildet ist. Der Kopf 3 besitzt auf seiner dem Schaft 2 abgewandten Seite eine Stirnseite, die als Reibfläche 4 ausgebildet ist. Von der Reibfläche erheben sich drei radial nach außen strebende Wülste 5, 6 und 7, denen in Bezug auf eine Drehrichtung gemäß dem eingezeichneten Drehpfeil, also im Uhrzeigersinn, jeweils eine Frontnut 8 und 9 (10 ist nicht sichtbar) vorgeordnet ist, die in Drehrichtung die Wülste 5, 6 und 7 begrenzt. Die Wülste 5, 6 und 7 heben sich gegenüber der Reibfläche 4 nur geringfügig ab und besitzen auf ihrer der Reibfläche 4 abgewandten Seite je eine Schabfläche (siehe Wulst 5 in Figur 1a), die in Figur 1b deutlicher zu sehen ist, worauf weiter unten näher eingegangen wird. Die Erhebung der Wülste 5, 6 und 7 bzw. der diese in Axialrichtung begrenzenden Schabflächen 11 beträgt etwas weniger als 1,0 mm. Vorteilhaft sind die Wülste 5, 6 und 7 gehärtet.

Die Schabflächen 11 können zusammen in einer Ebene liegen, sie können aber auch, wie weiter unten im Zusammenhang mit den Figuren 4, 5 und 6 erläutert, als koaxialer Kegel verlaufen (was im Zusammenhang mit den Figuren 4 und 5 näher erläutert wird). Das Befestigungselement 1 wird zum Reibschweißen gegen ein flächiges Bauteil gedrückt und in Rotation versetzt, wodurch sich aufgrund der Berührung der Schabflächen 11 und des flächigen Bauteils zunächst ein Abschaben der Oberfläche des Bauteiles ergibt, wodurch diese Oberfläche für den späteren eigentlichen Reibschweißvorgang gereinigt wird. Das von der Oberfläche abgeschabte Material, z.B. Verschmutzungen, Oxyde oder dergl., wird von den Wülsten 5, 6 und 7 in Drehrichtung geschoben und gelangt dabei in die benachbarte Frontnut 8, 9 bzw. 10, wo dieses abgeräumte Material den folgenden Reibschweißvorgang nicht stört. Durch entsprechende Rotation und Andrücken des Bauelementes 1 gegen ein Bauteil ergibt sich dann in bekannter Weise eine beim Reibschweißen durch Reibung entstehende Erwärmung der miteinander geriebenen Oberflächen, wobei schließlich die Erweichung der Materialien der gegeneinander gedrückten Teile entsteht und somit der Reibschweißvorgang vollendet wird. Das von den Wülsten 5, 6 und 7 stammende Material wird dabei ebenfalls größtenteils in die Frontnut 8, 9 und 10 verschoben, so dass es die Reibschweißverbindung nicht beeinträchtigen kann.

Das in der Figur 1a dargestellte Befestigungselement besitzt in seinem axialen Zentrum die konzentrische Bohrung 28, in der die Wülste 5, 6 und 7 und die Frontnut 8,9 und 10 auslaufen.

In Figur 1b ist in perspektivischer Sicht ein Ausschnitt aus Figur 1a dargestellt, wobei der Querschnitt des Wulstes 5 deutlich in Erscheinung tritt, der axial nach außen hin durch die Schabfläche 11 begrenzt wird und in Drehrichtung vor dem Wulst 5 die Frontnut 8 aufweist, die zur Aufnahme von abgeriebenem Material und Resten der Wulst 5 dient.

In der Figur 2 ist eine Abwandlung der Gestaltung gemäß Figur 1 dargestellt, wobei es sich wiederum um ein Befestigungselement 1 handelt, das als Bolzen ausgebildet ist, der ähnlich demjenigen in Figur 1a gestaltet ist. Allerdings besitzt das Befestigungselement 1 hier auf der Reibfläche 4 neben den drei Wülsten 12, 13 und 14 jeweils eine Frontnut 15, 16 und 17 und eine Rücknut 18, 19 und 20, wodurch die Aufnahmekapazität neben den Wülsten 12, 13 und 14 erhöht wird und im übrigen auch das Befestigungselement 1 sowohl in Rechtdrehung als auch in Linksdrehung angebracht werden kann. Darüber hinaus wird auf die Erläuterungen zu den Figuren 1 a und 1b verwiesen.

In der Figur 3 ist ein wiederum als Bolzen gebildetes Befestigungselement 1 dargestellt, das weitgehend demjenigen gemäß Figur 1a entspricht, allerdings im Bereich seiner Reibfläche 21 die konzentrisch umlaufende Ringnut 22 aufweist. Diese Ringnut dient zur Ausnahme von ggf. radial durch die Wülste 23, 24 und 25 verschobenen Materials.

In der Figur 4 ist ein Schnitt gemäß der Linie IV-IV aus Figur la dargestellt, der zeigt, dass hier sowohl die Reibfläche 26 als auch die Schabfläche 27 nach Art eines koaxialen flachen Kegels verlaufen, nämlich eines Kegels mit dem Winkel von α = 175°, wobei darauf hingewiesen wird, dass dieser Winkel in einem Bereich zwischen 160° und 178° liegen kann. Sowohl die Reibfläche 26 als auch die Schabfläche 27 sind also beide um den gleichen Winkel geneigt. Dies hat zur Folge, dass beim Aufdrücken des Befestigungselementes 1 gegen ein Bauteil zunächst der mittlere Bereich der Stirnseite des Befestigungselementes auf das Bauteil trifft, was sowohl für die Schabfläche als danach auch für die Reibfläche gilt. Somit entsteht bei Verwendung dieser Ausführungsform zunächst ein Abrieb und ein Reibschweißen im Zentrum des Kopfes 3, woraufhin sich das Abschaben und das Reibschweißen radial nach außen und über die gesamte Stirnfläche des Kopfes 3 erstreckt.

In der Figur 5 ist eine Variante zu der Darstellung gemäß Figur 4 wiedergegeben, bei der es sich darum handelt, die Schabfläche 29 und die Reibfläche 30 rechtwinklig zur Längsachse des Bauteiles 1 verlaufen zu lassen. Bei dieser Ausführungsform drücken also die Schabflächen 29 über ihre ganze Länge beim Aufsetzen auf ein Bauteil gegen dieses, wonach dann die Reibfläche 30 folgt, die ebenfalls sofort über ihre gesamte Fläche mit einem Bauteil in Berührung tritt.

In der Figur 6 ist eine weitere Variante zu der Darstellung gemäß Figur 4 gezeigt, bei der es sich darum handelt, dass die Schabfläche 31 in ihrer Gesamtheit eben verläuft, während die Reibfläche 32 nach Art eines flachen Kegels verläuft, wie dieser in der Figur 3 dargestellt ist.

Bezüglich der Befestigungselemente gemäß den Figuren 4, 5 und 6 sei noch darauf hingewiesen, dass die hier dargestellten Bolzen an ihren Schäften 2 jeweils mit Gewinde versehen sind, womit nur angedeutet werden soll, dass nach dem Reibschweißen die betreffenden Bolzen natürlich zum Anschrauben irgendeines weiteren Bauteils oder für sonstige Zwecke mit einer Verschraubung versehen sein können.

Figur 7 zeigt in perspektivischer Sicht ein Befestigungselement 33, das als Sechskantmutter ausgebildet ist und auf seiner einen Stirnseite die Reibfläche 34 trägt. In die Reibfläche 34 sind ähnlich wie bei der Gestaltung gemäß Figur 1a drei Wülste 35, 36 und 37 vorgesehen, die zusammen mit den vor ihnen verlaufenden Frontnuten ähnlich denjenigen gemäß Figur 1a weggeschabtes oder sonst wie weggedrücktes Material aufnehmen.

Figur 8 zeigt das Befestigungselement 33 in einem Schnitt längs der Linie VIII-VIII, der zeigt, dass hier die Reibfläche 34 nach Art eines Kegels konkav verläuft, was dazu führt, dass beim Aufsetzen dieses Befestigungselementes zunächst der äußere Rand der Reibfläche 34 mit der Oberfläche eines Bauteil in Berührung tritt und damit der Reibschweißvorgang von außen her nach innen zu verläuft.

## Patentansprüche

1. Befestigungselement (1) mit einer eine Reibfläche (4) bildenden konzentrischen Stirnseite zur Reibschweißverbindung mit einem flächigen Bauteil durch von dem Befestigungselement gegen das Bauteil wirkende Rotationskraft und Axialkraft und mit auf der Stirnseite mehreren radial verlaufenden Wülsten (5, 6, 7) **dadurch gekennzeichnet, dass** die Wülste (5, 6, 7) in Drehrichtung von einer in die Reibfläche (4) eingelassenen Frontnut (8, 9) begrenzt sind, wobei die Wülste (5, 6, 7) sich nur geringfügig axial gegenüber der Reibfläche (4) erheben und mit einer Schabfläche (11) versehen sind, von der beim Reibschweißvorgang abgeschabtes Material in die Frontnut (8, 9) geschoben wird, und dass die Schabflächen (11) zusammen in einer Ebene liegen oder als koaxialer Kegel verlaufen.

2. Befestigungselement nach Anspruch 1, **dadurch gekennzeichnet, dass** die Wülste (12, 13, 14) beidseitig jeweils in Drehrichtung von einer Frontnut (15, 16, 17) und einer Rücknut in der Reibfläche (4) begrenzt sind, wobei in die Rücknut (18, 19, 20) der von der Reibfläche (4) sich abhebende Rest des betreffenden Wulstes geschoben wird.

3. Befestigungselement nach Anspruch 1, **dadurch gekennzeichnet, dass** die Schabfläche (11) einseitig mit einer scharfen Kante versehen sind.

4. Befestigungselement nach Anspruch 2, **dadurch gekennzeichnet, dass** die Wülste beidseitig mit einer scharfen Kante versehen ist.

5. Befestigungselement nach Anspruch 1, **dadurch gekennzeichnet, dass** die Schabfläche abgerundet in den Wulst übergeht.

6. Befestigungselement nach einem der Ansprüche 1 bis 5, **dadurch gekennzeichnet, dass** die Stirnseite in ihrem äußeren Bereich eine konzentrisch umlaufende Ringnut (22) aufweist.

7. Befestigungselement nach Anspruch 1 bis 6, **dadurch gekennzeichnet, dass** die Stirnseite mit einer konzentrischen Bohrung (28) versehen ist.

8. Befestigungselement nach einem der Ansprüche 1 bis 7, **dadurch gekennzeichnet, dass** es als Bolzen (2) ausgebildet ist.

9. Befestigungselement nach einem der Ansprüche 1 bis 8, **dadurch gekennzeichnet, dass** es als Mutter (33) ausgebildet ist.

10. Befestigungselement nach Anspruch 1 bis 9, **dadurch gekennzeichnet, dass** die Reibfläche eben ausgebildet ist.

11. Befestigungselement nach Anspruch 1 bis 9, **dadurch gekennzeichnet, dass** die Reibfläche (26) einen koaxialen Kegel mit einem Kegelwinkel α = 160° bis 178° bildet.

12. Befestigungselement nach Anspruch 1 bis 11, **dadurch gekennzeichnet, dass** die Schabfläche eben ausgebildet ist.

13. Befestigungselement nach Anspruch 1 bis 11, **dadurch gekennzeichnet, dass** die Schabfläche (27) einen koaxialen Kegel mit einem Kegelwinkel von 160° bis 178° bildet.

14. Befestigungselement nach Anspruch 11, **dadurch gekennzeichnet, dass** der Kegel eine konvexe Reibfläche bildet.

15. Befestigungselement nach Anspruch 11, **dadurch gekennzeichnet, dass** der Kegel eine konkave Reibfläche bildet.

16. Befestigungselement nach einem der Ansprüche 1 bis 15, **dadurch gekennzeichnet, dass** die Wülste gehärtet sind.

## Claims

1. Fixing element (1) having a concentric front face forming a friction surface (4) for friction welding joining to a planar component by means of a rotational force and an axial force from the fixing element against the component, and having, at the front face, several radially extending beads (5, 6, 7) **characterized in that** the beads (5, 6, 7) are defined in the rotational direction by a front groove (8, 9) inserted into the friction surface (4), wherein the beads (5, 6, 7) only have a marginal extend protection relative to the friction surface (4) and are provided with a scraper surface (11) from which the scraped material is pushed into the front groove (8, 9), and that the scraper surfaces (11) together lie in plane or extend like a coaxial cone.

2. Fixing element according to claim 1 **characterized in that** the beads (12, 13, 14) are each delimited, on both sides, in the rotational direction by a front groove (15, 16, 17) and a back groove in the friction surface (4), wherein the rest of the respective bead extending upwards from the friction surface (4), is pushed into the back groove (18, 19, 20).

3. Fixing element according to claim 1 **characterized in that** the scraper surface (11) is provided with a sharp edge on one side.

4. Fixing element according to claim 2 **characterized in that** the beads are provided with a sharp edge on both sides.

5. Fixing element according to claim 1 **characterized in that** the scraper surface merges into the bead in a round fashion.

6. Fixing element according to one of the claims 1 to 5, **characterized in that** the front face comprises, in an outer area, a concentric circumferential ring groove (22).

7. Fixing element according to claim 1 to 6, **characterized in that** the front face is provided with a concentric bore (28).

8. Fixing element according to one of the claims 1 to 7, **characterized in that** it is formed as bolt (2).

9. Fixing element according to one of the claims 1 to 8, **characterized in that** it is formed as a nut (33).

10. Fixing element according to one of the claims 1 to 9, **characterized in that** the friction surface is formed planar.

11. Fixing element according to one of the claims 1 to 9, **characterized in that** the friction surface (26) forms a coaxial cone with a cone angle α = 160° to 178°.

12. Fixing element according to one of the claims 1 to 11, **characterized in that** the scraper surface is formed planar.

13. Fixing element according to one of the claims 1 to 11, **characterized in that** the scraper surface (27) forms a coaxial cone with a cone angle from 160 ° to 178°.

14. Fixing element according to claim 11, **characterized in that** the cone is a convex scraper surface.

15. Fixing element according to claim 11, **characterized in that** the cone forma a concave friction surface.

16. Fixing element according to claim 11, **characterized in that** the beads are hardened.

## Revendications

1. Elément de fixation (1) avec un côté frontal concentrique formant une surface de friction (4) pour une liaison par soudage par friction avec un composant plat par force de rotation et axiale active de l'élément de fixation contre le composant et avec plusieurs bourrelets (5, 6, 7) s'étendant radialement sur le côté frontal, **caractérisé en ce que** les bourrelets (5, 6, 7) sont limités dans le sens de rotation par une rainure frontale (8, 9) emboîtée dans la surface de friction (4), sachant que les bourrelets (5, 6, 7) ne s'élèvent que faiblement de manière axiale par rapport à la surface de friction (4) et sont pourvus d'une surface de raclage (11) à partir de laquelle lors du processus de soudage par friction, le matériau raclé est poussé dans la rainure frontale (8, 9) et **en ce que** les surfaces de raclage (11) sont situées ensemble sur un niveau ou s'étendent en tant que cône coaxial.

2. Elément de fixation selon revendication 1, **caractérisé en ce que** les bourrelets (12, 13, 14) sont limités respectivement bilatéralement dans le sens de rotation d'une rainure frontale (15, 16, 17) et d'une rainure arrière dans la surface de friction (4) sachant que le reste du bourrelet concerné se découpant de la surface de friction (4) est poussé dans la rainure arrière (18, 19, 20).

3. Elément de fixation selon revendication 1, **caractérisé en ce que** la surface de raclage (11) est pourvue unilatéralement d'une arête aiguisée.

4. Elément de fixation selon revendication 2, **caractérisé en ce que** les bourrelets sont pourvus bilatéralement d'une arête aiguisée.

5. Elément de fixation selon revendication 1, **caractérisé en ce que** la surface de raclage devient le bourrelet de manière arrondie.

6. Elément de fixation selon l'une des revendications 1 à 5, **caractérisé en ce que** le côté frontal présente dans sa zone extérieure une rainure annulaire (22) concentrique.

7. Elément de fixation selon revendication 1 à 6, **caractérisé en ce que** le côté frontal est pourvu d'un alésage concentrique (28).

8. Elément de fixation selon l'une des revendications 1 à 7, **caractérisé en ce qu'**il est formé en tant que boulon (2).

9. Elément de fixation selon l'une des revendications 1 à 8, **caractérisé en ce qu'**il est formé en tant qu'écrou (33).

10. Elément de fixation selon revendication 1 à 9, **caractérisé en ce que** la surface de friction est formée de forme plane.

11. Elément de fixation selon revendication 1 à 9, **caractérisé en ce que** la surface de friction (26) forme un cône coaxial avec un angle conique α = 160° jusqu'à 178°.

12. Elément de fixation selon revendication 1 à 11, **caractérisé en ce que** la surface de raclage est formée de forme plane.

13. Elément de fixation selon revendication 1 à 11, **caractérisé en ce que** la surface de raclage (27) forme un cône coaxial avec un angle conique de 160° à 178°.

14. Elément de fixation selon revendication 11, **caractérisé en ce que** le cône forme un surface de friction convexe.

15. Elément de fixation selon revendication 11, **caractérisé en ce que** le cône forme une surface de friction concave.

16. Elément de fixation selon l'une des revendications 1 à 15, **caractérisé en ce que** les bourrelets sont trempés.
